Europäisches Patentamt

European Patent Office

Office européen des brevets

(19)

(11) Veröffentlichungsnummer : **0 339 660 B1**

# (12) EUROPÄISCHE PATENTSCHRIFT

(45) Veröffentlichungstag der Patentschrift :
**25.03.92 Patentblatt 92/13**

(51) Int. Cl.$^5$ : **B60P 1/16**

(21) Anmeldenummer : **89107703.4**

(22) Anmeldetag : **27.04.89**

(54) Vorrichtung zum Kippen eines auf einem Fahrzeug kippbar angeordneten Aufbaus.

(30) Priorität : **27.04.88 DE 3814268**

(43) Veröffentlichungstag der Anmeldung :
**02.11.89 Patentblatt 89/44**

(45) Bekanntmachung des Hinweises auf die
Patenterteilung :
**25.03.92 Patentblatt 92/13**

(84) Benannte Vertragsstaaten :
**AT BE CH DE ES FR GB GR IT LI LU NL SE**

(56) Entgegenhaltungen :
**DE-A- 2 554 594**
**DE-B- 1 158 384**

(73) Patentinhaber : **FRANZ XAVER MEILLER**
**Fahrzeug- und Maschinenfabrik GmbH & Co**
**KG**
**Untermenzinger Strasse 1**
**W-8000 München 50 (DE)**

(72) Erfinder : **Märkl, Johann**
**Erich-Hubmann-Strasse 31**
**W-8060 Dachau (DE)**

(74) Vertreter : **Fincke, Karl Theodor, Dipl.-Phys. Dr.**
**et al**
**Patentanwälte H. Weickmann, Dr. K. Fincke**
**F.A. Weickmann, B. Huber Dr. H. Liska, Dr. J.**
**Prechtel Kopernikusstrasse 9 Postfach 86 08**
**20**
**W-8000 München 86 (DE)**

**Beschreibung**

Die Erfindung betrifft eine Vorrichtung zum Kippen eines auf einem Fahrzeug kippbar angeordneten Aufbaus nach dem Oberbegriff des Anspruchs 1.

Bei einer aus DE-A- 2 554 594 bekannten Vorrichtung dieser Art wird das erste Ventil nächst der Kipp-Endstellung des Aufbaus durch ein Stellglied, an das die Hubpresse oder auch der Aufbau anstößt, geöffnet und dadurch das Druckmittel nicht mehr in die Hubpresse eingeführt, sondern in eine drucklose Ablaufleitung, wodurch das Ausfahren der Hubpresse beendet wird.

Bei dieser Vorrichtung kann das Stellglied bei ausgefahrener Hubpresse auch versehentlich, etwa von Hand, derart betätigt werden, z. B. bei Wartungsarbeiten, daß die Hubpresse einfährt, wodurch eine Unfallgefahr entsteht.

Aufgabe der Erfindung ist es, eine solche Unfallgefahr zu beseitigen.

Die Lösung dieser Aufgabe ist in Anspruch 1 angegeben.

Wird bei einer erfindungsgemäßen Vorrichtung das Stellglied im Sinne der Öffnung des ersten Ventils unabsichtlich betätigt, so wird durch die Steuerwirkung der Steuerleitung das zweite Ventil geöffnet und dadurch die Abführungsleitung freigegeben.

Bei Erreichen der Kipplage des Aufbaus wird wie bei der bekannten Vorrichtung über das Stellglied das erste Ventil geöffnet und etwas Druckmittel fließt aus der Hubleitung in die Steuerleitung.

Zur Öffnung des zweiten Ventils wird eine verhältnismäßig große Kraft benötigt. Um diese Kraft aufzubringen, ist bevorzugt eine Ausbildung gemäß Anspruch 2 vorgesehen.

Bevorzugt ist dabei das zweite Ventil gemäß Anspruch 3 ausgebildet, damit es sich erst bei verhältnismäßig hohem Druck in der Hubleitung öffnet.

Damit der Kolben selbsttätig wieder in seine Anfangsstellung zurückgeführt wird, ist er bevorzugt gemäß Anspruch 4 ausgebildet. Diese Ausbildung hat zur Folge, daß das zweite Ventil, wenn der Druck in der Steuerleitung gesunken ist, den Kolben wieder in seine Anfangslage zurückführt, wobei es sich schließt.

Mit einer einzigen Leitung zum Zuführen des Druckmittels zur Hubpresse und zum Abführen des Druckmittels aus der Hubpresse kommt man aus, wenn eine Ausbildung gemäß Anspruch 5 vorgesehen ist. Das dritte Ventil wird dabeinur dann geöffnet, wenn ihm Druckmittel zum Anheben der Hubpresse zugeführt wird. Aus dem gleichen Grunde ist eine Ausbildung gemäß Anspruch 6 bevorzugt. Das Stellventil kann dabei von Hand betätigt werden, oder auch pneumatisch oder hydraulisch. Für eine pneumatische oder hydraulische Betätigung eignet sich besonders eine Ausbildung gemäß Anspruch 7, wie sie in Einzelheiten in der DE-A 2 554 594 beschrieben ist.

Die Erfindung wird im folgenden an zwei Ausführungsbeispielen unter Hinweis auf die beigefügten Zeichnungen erläutert.

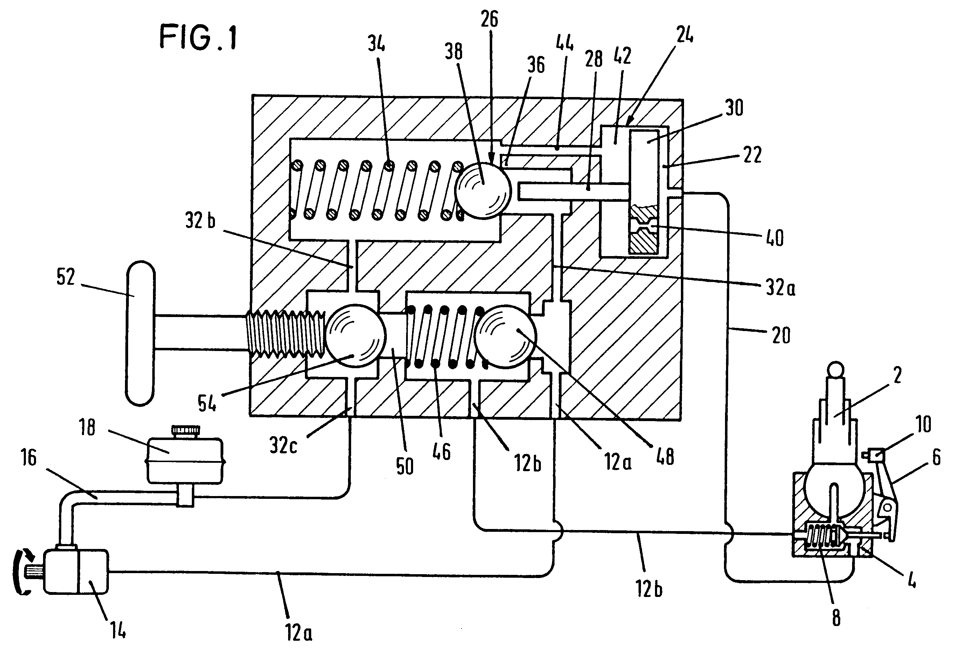

Fig. 1 zeigt schematisch ein erstes Ausführungsbeispiel.

Fig. 2 zeigt schematisch ein zweites Ausführungsbeispiel im Schaltzustand "Heben" oder "Kippen".

Fig. 3 zeigt schematisch das zweite Ausführungsbeispiel im Schaltzustand "Hub-Endstellung" oder "Kipp-Endstellung".

Gleiche Bezugsziffern bezeichnen gleichartige Bauteile.

Bei beiden Ausführungsformen ist einem zu einer Hubpresse 2 führenden Hubleitungsabschnitt 12b ein erstes Ventil 4 zugeordnet, das mittels eines Stellglieds 6 gegen die Kraft einer Feder 8 zu öffnen ist. Das Stellglied 6 weist einen Ansatz 10 auf, der in der Darstellung der Figuren bei Erreichen der Kipplage des Aufbaus betätigt wird.

Die Zuführung des Druckmittels in den Hubleitungsabschnitt 12b der Hubpresse 2 erfolgt über einen Hubleitungsabschnitt 12a mittels einer Pumpe 14, die das Druckmittel über eine Leitung 16 aus einem Vorratsbehälter 18 erhält. Wird das erste Ventil 4 geöffnet, so wird dadurch eine Verbindung zwischen der Hubpresse 2 und einer Steuerleitung 20 hergestellt. Diese Steuerleitung 20 mündet in einem Raum 22 eines Zylinders 24, der durch einen auf ein zweites Ventil 26 mit einem Stößel 28 wirkenden Kolben 30 begrenzt ist. Das zweite Ventil 26 liegt in einer Abführungsleitung 32a, 32b, 32c zum Vorratsbehälter 18. Bei Öffnung des zweiten Ventils 26 fließt somit das Druckmittel nicht mehr von dem Hubleitungsabschnitt 12a in den Hubleitungsabschnitt 12b, sondern wird von der Abführungsleitung 32a, 32b, 32c abgeführt, was zur Folge hat, daß die Hubpresse 2 stehen bleibt.

Das zweite Ventil 26 weist einen gegen den Druck einer Feder 34 von einem Sitz 36 abzuhebenden Ventilkörper 38 auf.

Der Kolben 30 enthält eine Drosselöffnung 40, durch die das Druckmittel, das durch die Steuerleitung 20 in den Raum 22 strömt, gedrosselt hindurchfließen kann, um durch einen Raum 42 auf der Rückseite des Kolbens 30 in eine Leitung 44 zu gelangen, die zu dem Leitungsabschnitt 32b und auf diesem Wege über den Leitungsabschnitt 32c in den Vorratsbehälter 18 führt.

Der Abschnitt 32a der Abführungsleitung 32a, 32b, 32c ist von der Hubleitung 12a, 12b stromaufwärts eines in der Hubleitung 12a, 12b liegenden, gegen den Druck einer Feder 46 zur Hubpresse zu öffnenden dritten Ventils 48 abgezweigt. Beim Ausfahren der Hubpresse wird dieses Ventil 48 durch den Druck im Hubleitungsabschnitt 12a geöffnet, und das Druckmittel gelangt dadurch in den Hubleitungsabschnitt 12b und somit in die Hubpresse 2.

Von der Hubleitung 12a, 12b ist stromabwärts des dritten Ventils 48 eine Senkleitung 50 abgezweigt, in der sich ein mit einem Handgriff 52 zu verstellendes Stellventil 54 befindet. Bei Öffnen des Stellventils 54 fließt das Druckmittel aus der Hubpresse 2 über den Hubleitungsabschnitt 12b und die Senkleitung 50 in den Abführungsleitungsabschnitt 32c und somit in den Vorratsbehälter 18 zurück.

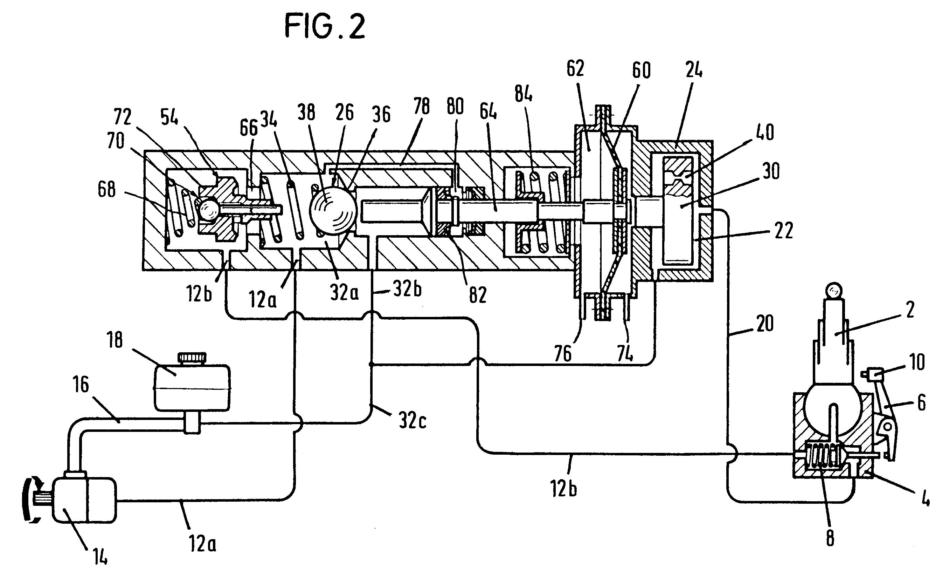

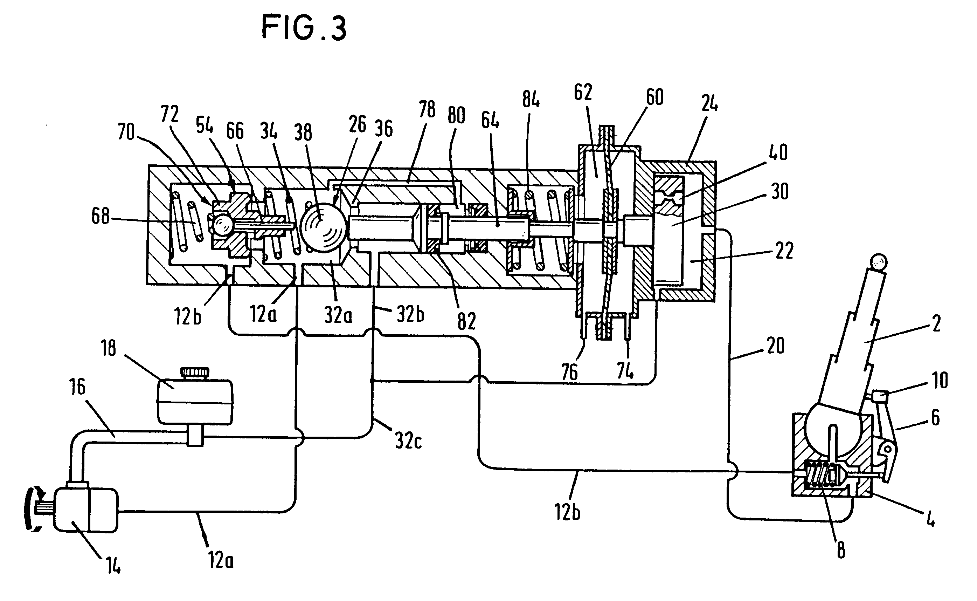

Bei der Ausführungsform nach Fig. 2 und Fig. 3 ist zwischen dem Kolben 30 und dem zweiten Ventil 26 ein von einer Membran 60 in einer Druckdose 62 axial verstellbarer erster Stößel 64 angeordnet. Dieser erste Stößel 64 wirkt auf den Ventilkörper 38 des zweiten Ventils 26. Der verstellbare Ventilkörper 38 wirkt seinerseits über einen axial verstellbaren zweiten Stößel 66 auf ein gegen die Kraft einer Feder 68 zu öffnendes Ventil 70 in einem hydraulisch verstellbaren Ventilkörper 72 des Stellventils 54.

Die Druckdose 62 weist beidseitig ihrer Membran 60 je einen Steuerungsanschluß 74, 76 auf. Die Beschickung des Steuerungsanschlusses 74 mit einem pneumatischen oder hydraulischen Stelldruck hat bei geöffnetem Ventil 26 die Öffnung des Ventils 70 zur Folge. Hierzu ist nur ein verhältnismäßig geringer Druck erforderlich.

Mit der Öffnung des Ventils 70 kann Druckmittel über die Abführungsleitung 32a, 32b, 32c austreten und der Druck in dem Hubleitungsabschnitt 12b fällt ab. Dadurch kann auch durch die relativ geringe Stellkraft der Membrane 60 über den Stößel 64 der Ventilkörper 72 abgehoben werden und somit das Druckmittel zum Senken der Last über den vollen Öffnungsquerschnitt rasch abfließen.

Eine Leitung 78 zwischen dem zweiten Ventil 26 und einem Raum 80 hinter einem Abdichtungskolben 82 am ersten Stößel 64 sorgt für einen Druckausgleich zum Raum 80.

Durch eine Feder 84 wird die Mittellage der Membrane 60 und somit des Stößels 64 hergestellt, so daß bei drucklosem Zustand der Steuerungsanschlüsse 74 und 76 die Stellteile so fixiert sind, daß das Ventil 26 geöffnet bleibt, das von der Pumpe 14 kommende Druckmittel über die Abführungsleitung 32a, 32b, 32c abfließen kann, das Stellventil 54 aber geschlossen bleibt. Der Aufbau kommt damit zum Stillstand.

Für beide Ausführungsformen gilt:

Bei länger während unbeabsichtigter Öffnung des Ventils 4 kann über die Drosselöffnung 40 im Kolben 30 Druckmittel entweichen, was ein geringfügiges Absinken des angehobenen Aufbaus zur Folge hat. Dieses Absinken ist im Zusammenhang mit der erwünschten Sicherung jedoch völlig unerheblich und vernachlässigbar.

Im Moment des Abstellens kommt es in der Praxis nicht, wie es theoretisch denkbar wäre, zu einem periodischen Schwingen. Durch die stetige Förderung von Druckmittel aus der Pumpe 14 stellt sich vielmehr nach einem weichen Ansprechen ein Schwebezustand ein. Wird in dieser Stellung die Pumpe 14 abgestellt, sinkt der Aufbau, also die Hubpresse 2, geringfügig ab, bis die Abstelleinrichtung, also der Ansatz 10, freigegeben wird und sich das Ventil 4 wiederum schließt. Der hierbei zustande kommende Weg ist im Vergleich zur gesamten Hubbewegung derartig gering, daß dies ohne Einfluß auf den angestrebten Sicherungseffekt bleibt.

## Patentansprüche

1. Vorrichtung zum Kippen eines auf einem Fahrzeug kippbar angeordneten Aufbaus mittels wenigstens einer durch Zuführung eines hydraulischen Druckmittels in eine Hubleitung (12a, 12b) auszufahrenden Hubpresse (2), bei der der Aufbau nächst seiner Kipp-Endstellung ein in der Hubleitung (12a, 12b) liegendes erstes Ventil (4) zur Verhinderung einer weiteren Zuführung des Druckmittels in die Hubpresse (2) betätigt, **dadurch gekennzeichnet,** daß das erste Ventil (4) bei seiner Betätigung eine Verbindung zwischen der Hubpresse (2) und einer Steuerleitung (20) herstellt, und daß von der Hubleitung (12a, 12b.) eine Abführungsleitung (32a, 32b, 32c) für das Druckmittel abgezweigt ist, in der ein von dem Druck in der Steuerleitung (20) zu öffnendes zweites Ventil (26) liegt.

2. Vorrichtung nach Anspruch 1, dadurch gekennzeichnet, daß die Steuerleitung (20) in einem Raum (22) eines Zylinders (24) mündet, der durch einen auf das zweite Ventil (26) wirkenden Kolben (30) begrenzt ist.

3. Vorrichtung nach Anspruch 1 oder 2, dadurch gekennzeichnet, daß das zweite Ventil (26) ein gegen den Druck einer Feder (34) zu öffnendes Ventil - vorzugsweise ein gleichzeitig die gesamte hydraulische Anlage gegen Überlastung schützendes Überdruckventil - ist.

4. Vorrichtung nach Anspruch 2 oder 3, dadurch gekennzeichnet, daß der Kolben (30) eine Drosselöffnung (40) enthält und daß der Zylinder (24) auf der der Mündung der Steuerleitung (20) abgewandten Seite des Kolbens (30) mit der Abführungsleitung (32a, 32b, 32c) stromabwärts des zweiten Ventils (26) verbunden ist.

5. Vorrichtung nach einem der vorstehenden Ansprüche, dadurch gekennzeichnet, daß die Abführungsleitung (32a, 32b, 32c) von der Hubleitung (12a, 12b) stromaufwärts eines in der Hubleitung (12a, 12b) liegenden, gegen Federdruck in Richtung zur Hubpresse zu öffnenden dritten Ventils (48) abgezweigt ist.

6. Vorrichtung nach Anspruch 5, dadurch gekennzeichnet, daß von der Hubleitung (12a, 12b, 126) stromabwärts des dritten Ventils (48) eine Senkleitung (50) abgezweigt ist, in der sich ein Stellventil (54) befindet.

7. Vorrichtung nach einem der Ansprüche 2 bis 4, dadurch gekennzeichnet, daß zwischen dem Kolben (30) und dem zweiten Ventil (26) ein von einem Stellglied (62) axial verstellbarer Stößel (64) angeordnet ist, der auf das zweite Ventil (26) einwirkt.

## Claims

1. An apparatus for tilting a body mounted tiltably on a vehicle by means of at least one lifting jack (2) which can be extended by supplying a pressurised hydraulic medium into a lifting circuit (12a, 12b) and in which, near to its tilting end position, the body actuates a first valve (4) disposed in the lifting circuit (12a, 12b) so as to prevent any further supply of the pressurised medium to the lifting jack (2),
characterised in that, when actuated, the first valve (4) effects a connection between the lifting jack (2) and a control line (20),
and in that a delivery circuit (32a, 32b, 32c) for the pressurised medium is branched off from the lifting circuit (12a, 12b), in which delivery circuit is disposed a second valve (26) opened by the pressure in the control line (20).

2. An apparatus according to Claim 1, characterised in that the control line (20) discharges into a chamber (22) of a cylinder (24), which is bounded by a piston (30) acting on the second valve (26).

3. An apparatus according to Claim 1 or 2, characterised in that the second valve (26) is a valve opening against the pressure of a spring (34), preferably a pressure-relief valve simultaneously protecting the entire hydraulic installation against overload.

4. An apparatus according to Claim 2 or 3, characterised in that the piston (30) includes a throttle opening (40) and in that on that side of the piston (30) remote from the mouth of the control line (20) the cylinder (24) is connected to the delivery circuit (32a, 32b, 32c) downstream of the second valve (26).

5. An apparatus according to any one of the preceding Claims, characterised in that the delivery circuit (32a, 32b, 32c) is branched off from the lifting circuit (12a, 12b) upstream of a third valve (48) disposed in the lifting circuit (12a, 12b) and opening against spring pressure in the direction of the lifting jack.

6. An apparatus according to Claim 5, characterised in that a lowering line (50), in which an adjusting valve (54) is provided, is branched off from the lifting circuit (12a, 12b) downstream of the third valve (48).

7. An apparatus according to any one of Claims 2 to 4, characterised in that a push rod (64), which is adjustable axially by an adjusting member (62)and which acts on the second alve (26), is disposed between the piston (30) and the second valve (26).

## Revendications

1. Dispositif pour faire basculer un ensemble monté basculant sur un véhicule, à l'aide d'au moins un vérin de levage (2) devant être déployé par admission d'un fluide hydraulique sous pression dans un conduit de levage (12a, 12b), dispositif dans lequel, à proximité directe de sa position de basculement extrême, ledit ensemble actionne une première soupape (4) logée dans le conduit de levage (12a, 12b), en vue d'empêcher une poursuite de l'admission du fluide sous pression dans le vérin de levage (2),
caractérisé par le fait que, lors de son actionnement, la première soupape (4) établit une liaison entre le vérin de levage (2) et un conduit de commande (20) ;
et par le fait qu'un conduit (32a, 32b, 32c) d'évacuation du fluide sous pression, bifurquant du conduit de levage (12a, 12b), renferme une deuxième soupape (26) devant être ouverte par la pression régnant dans le conduit de commande (20).

2. Dispositif selon la revendication 1, caractérisé par le fait que le conduit de commande (20) débouche dans une chambre (22) d'un cylindre (24), délimitée par un piston (30) agissant sur la deuxième soupape (26).

3. Dispositif selon la revendication 1 ou 2, caractérisé par le fait que la deuxième soupape (26) est une soupape devant être ouverte en s'opposant à la pression d'un ressort (34) - de préférence une soupape de surpression protégeant simultanément tout le système hydraulique d'une surcharge -.

4. Dispositif selon la revendication 2 ou 3, caractérisé par le fait que le piston (30) présente un orifice d'étranglement (40) ; et par le fait que le cylindre (24) est relié au conduit d'évacuation (32a, 32b, 32c) en aval de la deuxième soupape (26), du côté du piston (30) qui est tourné à l'opposé de l'embouchure du conduit de commande (20).

5. Dispositif selon l'une des revendications précédentes, caractérisé par le fait que le conduit d'évacuation (32a, 32b, 32c) bifurque, du conduit de levage (12a, 12b), en amont d'une troisième soupape (48) logée dans ledit conduit de levage (12a, 12b), et devant être ouverte en direction du vérin de levage en s'opposant à la pression d'un ressort.

6. Dispositif selon la revendication 5, caractérisé par le fait qu'un conduit d'abaissement (50), dans lequel se trouve une soupape de réglage (54), bifurque du conduit de levage (12a, 12b, 126) en aval de la troisième soupape (48).

7. Dispositif selon l'une des revendications 2 à 4, caractérisé par le fait qu'un coulisseau (64), mobile axialement sous l'action d'un organe de réglage (62) et interposé entre le piston (30) et la deuxième soupape (26), agit sur cette deuxième soupape (26).

FIG.1

FIG.2

FIG.3